# FASCICULE DE BREVET EUROPEEN

(11) **EP 2 114 754 B1**
(45) Date de publication et mention de la délivrance du brevet: **11.01.2012**
(21) Numéro de dépôt: 08775659.9
(22) Date de dépôt: 03.03.2008
(51) Int. Cl.: B62D 25/16, B60R 21/34, B62D 65/06

(54) **AGENCEMENT DE FIXATION D'UNE AILE SUR UNE STRUCTURE DE CARROSSERIE D'UN VEHICULE**
ANORDNUNG ZUR BEFESTIGUNG EINES KOTFLÜGELS AN DER KAROSSERIE EINES KRAFTFAHRZEUGS
ARRANGEMENT FOR ATTACHING A FENDER ON THE BODYWORK STRUCTURE OF A VEHICLE

(30) Priorité: 06.03.2007 FR 0753674
(43) Date de publication de la demande: 11.11.2009
(73) Titulaire: Renault SAS, 92100 Boulogne Billancourt (FR)
(72) Inventeur: GOURVIL, JEAN-LUC, F-78990 Elancourt (FR); PANCHERET, BRICE, F-CHEVREUSE 78460 (FR); MATHIEU, ERIC, F-92700 Colombes (FR)
(86) Numéro de dépôt international: PCT/FR2008/050354
(87) Numéro de publication internationale: WO 2008/122736

(56) Documents cités:
- EP-A- 1 398 249
- FR-A1- 2 860 763
- US-A1- 2005 099 035

## Description

La présente invention concerne un agencement de fixation d'une aile sur une structure de carrosserie d'un véhicule, du type comportant un support d'aile solidaire de la structure de carrosserie, et sur lequel est monté l'aile.

Une carrosserie de véhicule automobile est communément constituée d'une pluralité d'éléments distincts qui sont solidarisés sur une structure rigide, formant châssis. Parmi ces éléments, on distingue notamment les deux ailes avant qui sont plus particulièrement destinées à recouvrir et à entourer les roues avant du véhicule. On distingue également le capot avant qui est articulé dans une zone proche du pare-brise et qui s'étend entre les deux ailes avant.

Pour maintenir une aile sur une structure de carrosserie de véhicule, il est connu d'utiliser un support formant interface entre la face interne de l'aile en question et la cassie proprement dite. Ce support est généralement doté d'un certain nombre d'éléments de liaison, formant points de fixation, sur lesquels vient se solidariser notamment la partie supérieure de l'aile. Par ailleurs, le support est lui-même fixé à la structure de carrosserie, généralement par vissage.

Ce type de support d'aile présente un rôle essentiellement géométrique, et notamment dans le cas d'une aile plastique, si celle-ci est amenée à subir un passage en étuve pour le traitement en cataphorèse en même temps que la caisse. Dans le but de réaliser cette fonction de géométrie, des supports en tôle fortement dimensionnés ont pu être utilisés précédemment, afin de proposer un assemblage rigide de l'aile.

Toutefois, ces supports doivent répondre d'une part à des normes choc piéton, qui obligent à concevoir des supports d'aile aptes à se déformer sous un effort vertical, et d'autre part à des cahiers des charges de choc frontal, qui obligent à concevoir des supports d'aile aptes à se compacter sous un effort longitudinal.

En outre, un jeu optimisé doit être présent entre le montant de baie et la partie supérieure de l'aile. Ce jeu doit être présent pour éviter le contact entre l'aile et la caisse avant cataphorèse, et éviter ainsi que cette zone de contact ne soit pas protégé contre la corrosion. Toutefois, ce jeu doit être maîtrisé afin qu'il n'engendre pas un jeu conséquent entre l'aile et le montant de baie.

Un agencement de fixation d'aile sur une structure de carrosserie tel que décrit par le préambule de la revendication 1 est connu de EP 1398249 A1.

Un des objectifs de l'invention est donc de proposer un support d'aile qui puisse répondre à l'ensemble de ces contraintes évoquées ci-dessus, mais qui, en réponse à des objectifs que l'on retrouve invariablement chez les différents constructeurs automobiles, soit peu coûteuse et peu encombrante.

Pour répondre à ces objectifs, l'invention propose un agencement tel que décrit précédemment, et caractérisé en ce que le support d'aile est formé d'un premier moyen de support et d'un premier moyen de renfort distinct dudit premier moyen de support, et en ce que d'une part l'aile est montée sur le premier moyen de support par l'intermédiaire d'au moins un moyen d'indexage glissant, et d'autre part l'aile est montée sur le premier moyen de renfort par l'intermédiaire d'ensemble de serrage sans degré de liberté.

Selon différentes caractéristique de la présente invention :
- le premier moyen de support est associé au bord supérieur de l'aile, et en ce que le premier moyen de renfort est associé au coin supérieur de l'aile situé dans le prolongement arrière du bord supérieur.
- le moyen d'indexage glissant est apte à autoriser un degré de liberté selon la direction principale du bord supérieur de l'aile.
- le premier moyen de support est associé à un premier élément de structure de carrosserie, et en ce que le premier moyen de renfort est associé à un deuxième élément de structure de carrosserie distinct du premier élément de structure.

- le premier moyen de support porte un moyen de serrage de l'aile, en complément du moyen d'indexage glissant.
- le premier moyen de support porte des amorces de rupture de sorte que le premier moyen de support est apte à s'affaisser sensiblement verticalement sous un effort déterminé, et/ou apte à se compacter sensiblement longitudinalement sous un effort déterminé.
- l'aile est une aile en matériau plastique.
- le support d'aile est en tôle.

L'invention concerne également un véhicule automobile du type comportant un agencement de fixation tel qu'évoqué ci-dessus.

D'autres caractéristiques et avantages de l'invention apparaîtront à la lecture de la description détaillée qui suit pour la compréhension de laquelle on se reportera aux dessins annexés dans lesquels :
- la figure 1 est une représentation schématique de l'agencement de fixation d'une aile selon la présente invention ;

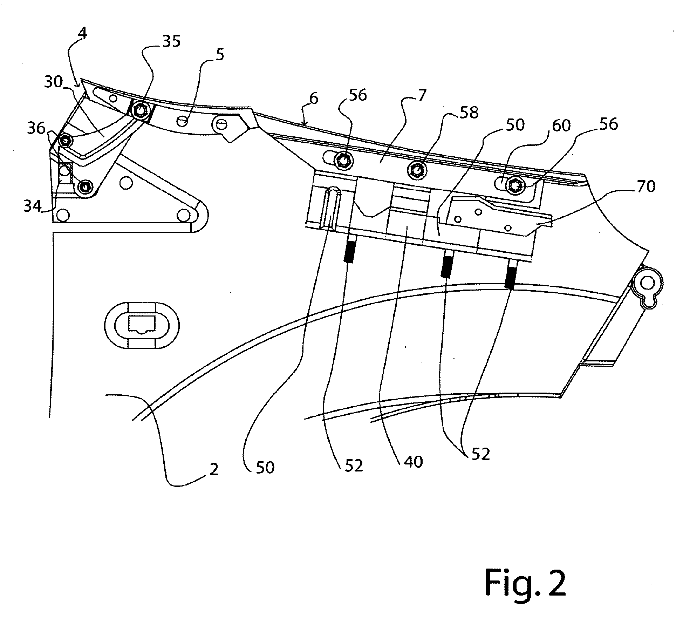

- la figure 2 est un agrandissement de l'aile et du support d'aile représentés à la figure 1;

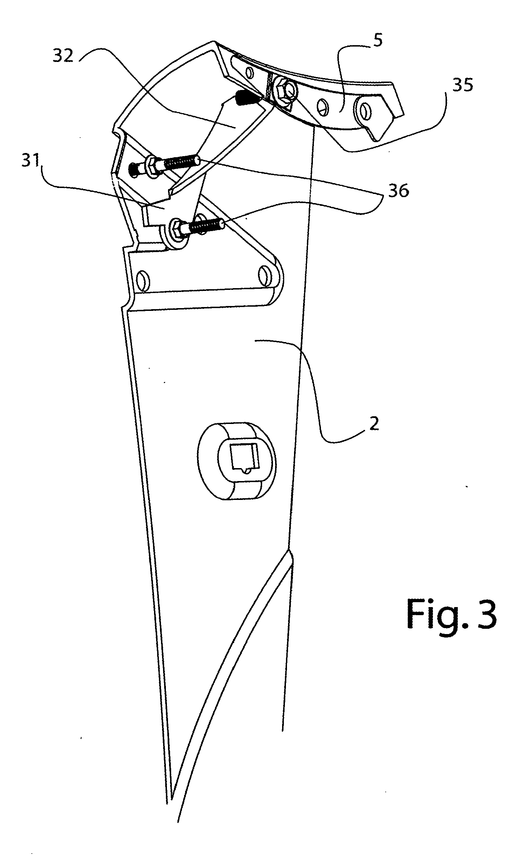

- la figure 3 est une représentation schématique de l'aile et du premier moyen de renfort représenté aux figures 1 et 2 ;
- la figure 4 est une représentation schématique de la figure 2, vue de trois quart arrière, depuis l'intérieur du véhicule.

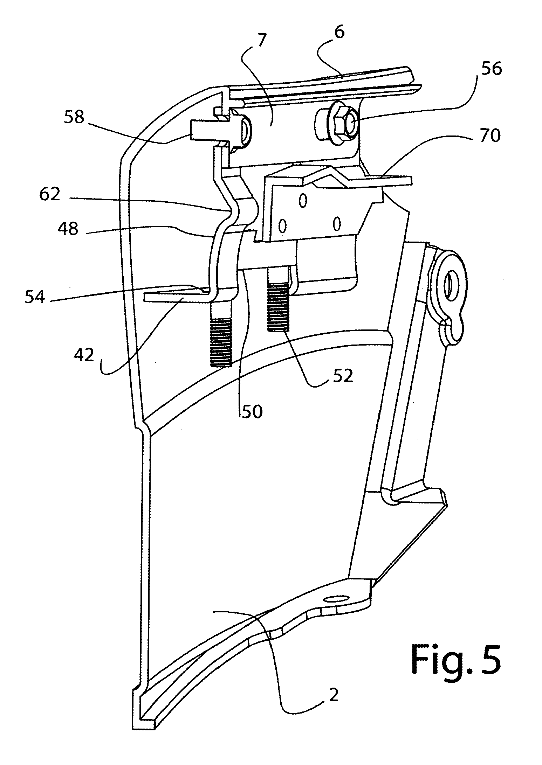

- la figure 5 est une représentation schématique de l'aile et du premier moyen de support représenté aux figures 1 et 2, selon un angle de vue équivalent à celui de la figure 3, et selon une première coupe réalisée au niveau de la patte centrale du premier moyen de support ;
- la figure 6 est une représentation schématique de l'aile et du premier moyen de support représenté aux figures 1 et 2, selon un angle de vue équivalent à celui de la figure 3, et selon une deuxième coupe réalisée au niveau d'une patte d'indexage du premier moyen de support ;

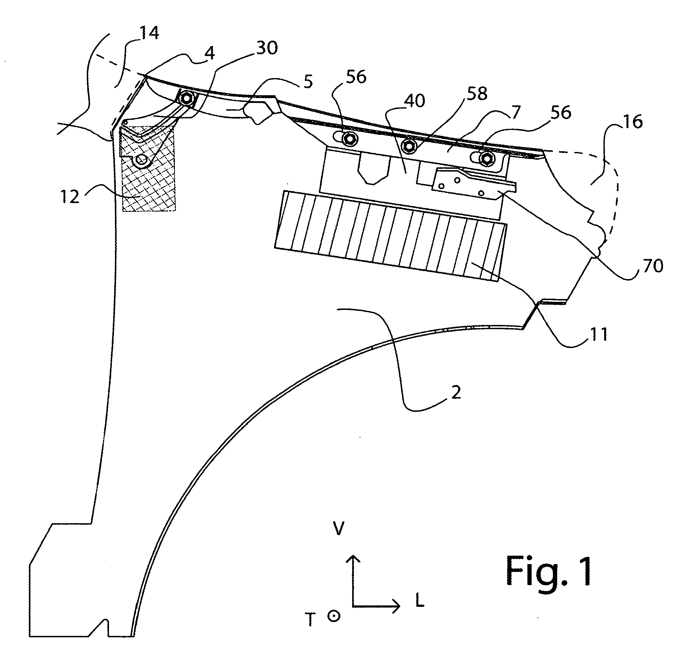

Dans la description qui va suivre, on adoptera à titre non limitatif une orientation longitudinale, verticale et transversale selon l'orientation traditionnellement utilisée dans l'automobile et indiquée par le trièdre L, V, T de la figure 1.

Tel que représenté sur les figures, le support d'aile associé à l'aile 2 est formé de deux pièces distinctes, à savoir d'une part un premier moyen de renfort 30 disposé dans le coin supérieur 4 de l'aile 2 amené à être en regard du montant de baie 14 représenté en pointillés sur la figure 1, c'est-à-dire le coin de l'aile 2 orienté longitudinalement vers l'habitacle du véhicule et verticalement vers le haut, et d'autre part un premier moyen de support 40 disposé le long du bord supérieur 6 de l'aile 2, c'est-à-dire le bord qui s'étend longitudinalement du montant de baie 14 vers le projecteur 16 représenté également en pointillés sur la figure 1.

Le premier moyen de support 40 est formé d'une pièce de base sensiblement longitudinale. Cette pièce de base présente une forme « en L », avec une première face sensiblement horizontale 42 prolongée perpendiculairement et vers le haut par une deuxième face verticale 44. Cette deuxième face verticale 44 est prolongée verticalement par trois pattes, deux pattes d'indexage 46 prolongeant la deuxième face 44 à chacune de ses extrémités longitudinales, et une patte centrale 48 prolongeant la deuxième face 44 en une patte 48 disposée longitudinalement entre les deux pattes d'indexage 46.

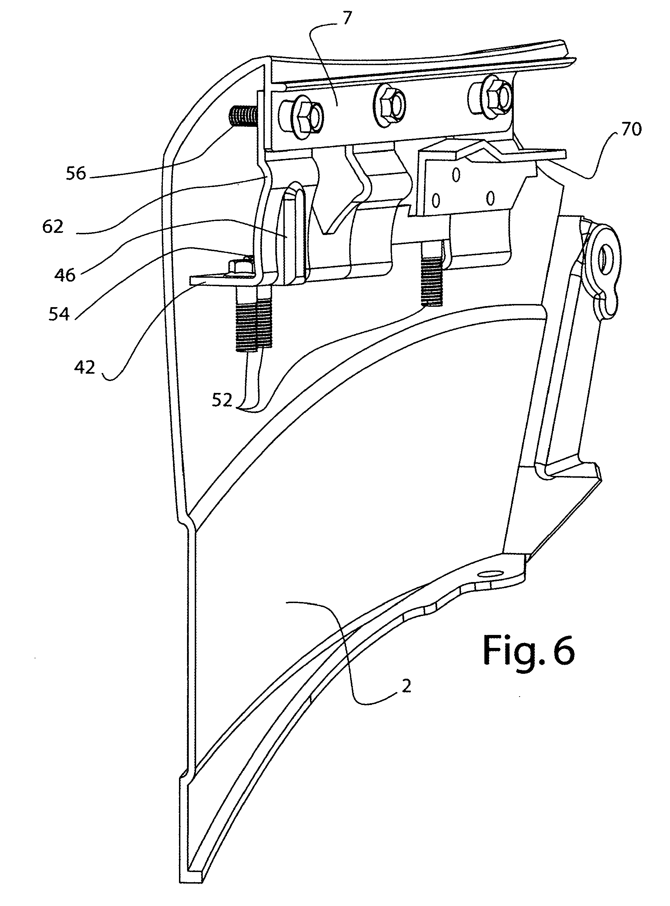

Des amorces de rupture sont réalisées sur cette deuxième face verticale 44 par des striures verticales 50, disposées notamment et à titre non limitatif sur les pattes d'indexage 46 et à proximité de la patte centrale 48. Ces amorces doivent permettre le compactage nécessaire en cas de choc frontal du premier moyen de support 40, apte ainsi à accompagner le compactage en cas de choc frontal du premier élément de structure de carrosserie 11 sur lequel est fixé le premier moyen de support 40 par l'intermédiaire d'au moins trois moyens de fixation 52. Il est à noter qu'avantageusement, un de ces trois moyens de fixation 52 est décalé transversalement pour offrir un plan de fixation apte à assurer une position stable du premier moyen de support 40 par rapport au premier élément de structure de carrosserie 11. A cet effet, tel que représenté à la figure 6 par exemple, la première face sensiblement horizontale 42 du premier moyen de support 40 présente une patte de fixation 54 prolongeant transversalement la première face 42, de sorte que le moyen de fixation 52 porté par cette patte de fixation 54 est décalé transversalement.

Chaque patte d'indexage 46, respectivement patte centrale 48 porte à son extrémité un moyen d'indexage 56, respectivement un moyen de serrage 58, apte à coopérer avec un premier bord tombé 7 du bord supérieur 6 de l'aile. Les moyens d'indexage 56 portés par les pattes d'indexage 46, et donc situés aux extrêmes longitudinales du premier moyen de support 40, ont des degrés de liberté, pour la mise en position de l'aile 2 notamment selon la direction longitudinale. Un oeillet 60 correspondant à chaque moyen d'indexage 56 est réalisé sur le premier bord tombé 7 de l'aile 2 pour permettre cette mise en position. Le moyen de serrage 58 porté par la patte centrale 48 est utilisé pour fixer rigidement l'aile 2 et le support d'aile, lorsque cette aile 2 a été correctement mise en position par rapport à la structure de carrosserie, et après le passage du véhicule en cataphorèse, c'est-à-dire lorsque l'aile 2 s'est dilatée en modifiant ses dimensions initiales. Le procédé et les étapes de montage seront décrits ci-dessous.

En outre, ces pattes 46, 48 présentent chacune une pliure longitudinale 62 qui crée une amorce de rupture apte à permettre l'affaissement des pattes 46, 48 sous un effort vertical.

Tel que représenté sur les figures, le premier moyen de support 40 porte à son extrémité longitudinale avant un deuxième moyen de support 70, apte à assurer l'indexage et la fixation du projecteur 16 avant représenté en pointillés sur la figure 1.

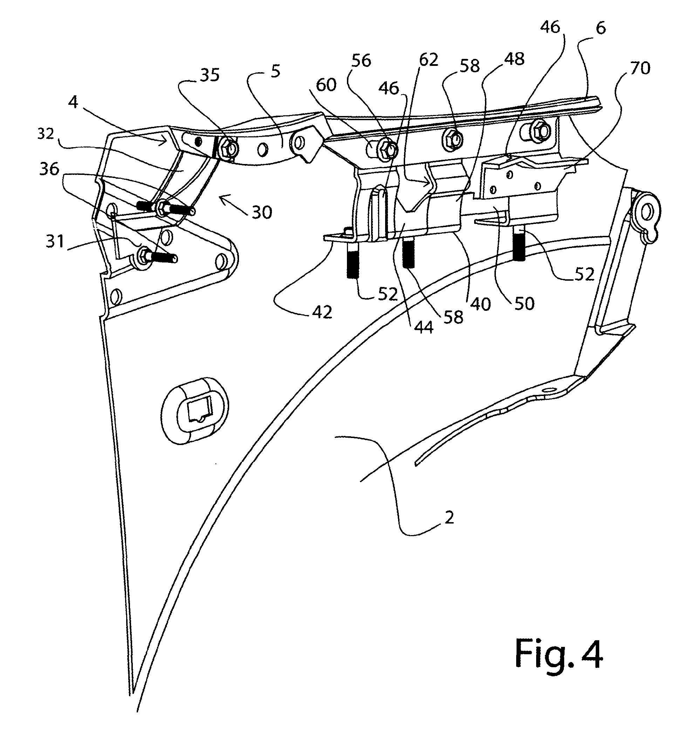

Le premier moyen de renfort 30 est monté dans le coin supérieur 4 de l'aile 2. Dans cette zone, le premier moyen de renfort 30 est formé d'une équerre dont une première face d'appui 31 s'étend sensiblement contre la face verticale de l'aile, et dont un prolongement 32 transversal et vertical est vissé à un deuxième bord tombé 5 de l'extrémité supérieure de l'aile, ce deuxième bord tombé 5 étant décalé transversalement vers l'intérieur du véhicule. Le premier moyen de renfort 30 est lié à l'aile 2 dans cette première face d'appui 31 par un premier ensemble de serrage 34, et lié par un deuxième ensemble de serrage 35 à la partie supérieure de l'aile 2, assurant ainsi une rigidification de ce coin 4 de l'aile 2 par un équerrage. Tel que représenté sur la figure 4, notamment, des moyens de solidarisation 36 sont aptes à coopérer avec le premier moyen de renfort 30 pour assurer la solidarisation de ce premier moyen de renfort 30 avec un deuxième élément de structure de carrosserie 12.

Le premier moyen de renfort 30 est mis en place sur le deuxième élément de structure de carrosserie 12 par l'intermédiaire de ces moyens de solidarisation 36, préalablement au montage de l'aile. L'aile 2 est ainsi amenée contre le premier moyen de renfort 30, est indexée par le premier ensemble de serrage 34, puis arrêtée en position de façon définitive par le deuxième ensemble de serrage 35.

Le support d'aile selon l'invention, formé de deux parties que sont le premier moyen de renfort 30 et le premier moyen de support 40, permet une modification des dimensions, de la forme ou du matériau de l'une des deux parties sans avoir à recalculer les données correspondantes relatives à la deuxième partie, et sans avoir à redessiner l'ensemble des fonctions du support d'aile.

De plus, le premier moyen de renfort 30, qui assure l'indexage supérieur de l'aile 2, et assure ainsi la tenue d'un jeu optimisé entre le montant de baie 14 et l'aile 2, n'est pas impacté par la prise en compte des deux efforts auxquels est soumis le premier moyen de support 40 formant la partie inférieure du support d'aile, à savoir en cas de choc frontal et de choc piéton.

D'une part, le premier moyen de support 40 est solidarisé à au moins un premier élément de structure de carrosserie 11 du bloc avant, comme un renfort de côté d'auvent par exemple, cet élément de structure étant étudié pour se compacter sous l'effet d'un choc frontal afin d'emmagasiner l'énergie développée lors du choc. Les supports d'ailes ne doivent pas interférer sur ce compactage et doivent pouvoir suivre la cinématique d'empilage. A cet effet, comme décrit précédemment, le support d'aile selon l'invention présente un premier moyen de support 40 munie de striures verticales 50, qui font l'effet d'amorces de rupture et permettent à cette première partie du support d'aile de se plier en accordéon conformément au reste du bloc avant.

D'autre part, les normes de choc piéton imposent de rendre possible un affaissement de l'aile 2 et du capot avant en cas de choc sensiblement vertical, simulation de piéton projeté sur le capot. Ces chocs peuvent impacter le capot et l'aile 2 dans une zone longitudinale prédéterminée à laquelle correspond le premier moyen de support 40 formant le support d'aile. Chaque patte 46, 48 assurant la liaison entre l'aile 2, amenée à s'affaisser, et le support d'aile, doit pouvoir suivre le mouvement d'affaissement, et est munie à cet effet tel que décrit précédemment de pliures 62 formant amorces de rupture. La patte centrale 48 a une position longitudinale telle qu'elle doit être spécialement dimensionné pour prendre en compte les efforts verticaux sur capot dus au choc piéton. A cet effet, l'amorce de rupture peut ainsi être, tel que représenté à titre d'exemple sur la figure 4, plus marquée sur le profil de la patte centrale 48 que sur les profils des pattes extrêmes 46.

Or, le premier moyen de renfort 30 formant partie du support d'aile n'est pas impacté par les normes spécifiques du choc piéton, car elle se situe dans une zone correspondante à la partie supérieure du capot, qui se situe trop loin de l'extrémité avant pour être concernée par ces normes. En outre, ce premier moyen de renfort 30 n'est pas impacté par les cahiers des charges spécifiques au compactage en cas de choc frontal, car elle se situe dans une zone proche de l'habitacle, à partir de laquelle plus de rigidité est souhaitée pour éviter des intrusions dans l'habitacle.

Par contre, les deux parties formant le support doivent permettre une grande rigidité transversale de l'aile, afin d'éviter des déformations de l'aile 2 suite à un ensoleillement excessif. Cette rigidité transversale est assurée naturellement en partie supérieure par l'équerrage du coin supérieur 4 de l'aile 2 par le premier moyen de renfort 30, solidaire du deuxième élément de structure de carrosserie 12. D'autre part, la rigidité transversale est assurée au niveau du premier moyen de support 40 par le moyen de serrage 58, qui n'offre aucun degré de liberté à l'aile selon cette direction transversale, et qui est serré après le passage de l'aile en cataphorèse et donc après la dilatation de cette aile.

Conformément au support d'aile et à l'agencement de fixation de l'aile 2 tel que décrit ci-dessus, le procédé de montage d'une aile 2 est le suivant :
Tel que représenté sur la figure 4, notamment, des moyens de solidarisation 36 sont aptes à coopérer avec le premier moyen de renfort 30 pour assurer la solidarisation de ce premier moyen de renfort 30 avec le deuxième élément de structure de carrosserie 12.

Le premier moyen de renfort 30 est initialement mis en place sur le deuxième élément de structure de carrosserie 12 par l'intermédiaire des moyens de solidarisation 36. Parallèlement, le premier moyen de support 40 est monté préalablement sur le premier élément de structure correspondant 11 par l'intermédiaire des moyens de fixation 52.

L'aile 2 est alors amenée près du côté de caisse, de sorte que le premier bord tombé 7 du bord supérieur 6 de l'aile soit en regard du premier élément de structure de carrosserie correspondant 11 et du premier moyen de support 40 associé, et que le deuxième bord tombé 5 de l'extrémité supérieure de l'aile soit en regard du deuxième élément de structure de carrosserie 12 et du premier moyen de renfort associé 30.

Puis on fait correspondre dans un premier temps les moyens d'indexage 56 avec les oeillets 60 formés dans le premier bord tombé 7. Ces moyens d'indexage sont clippés dans les oeillets 60 et permettent de supporter l'aile en laissant un degré de liberté sensiblement longitudinal. Dans un deuxième temps, l'aile 2 est amenée contre le premier moyen de renfort 30, est indexée par le premier ensemble de serrage 34, puis arrêtée en position de façon définitive par le deuxième ensemble de serrage 35. L'opérateur peut aisément faire correspondre les ensembles de serrage 34, 35 avec les trous de fixation correspondants sur l'aile, du fait de la liberté longitudinale offerte par les moyens d'indexage glissants 56, et par la déformation de l'aile en transversal et vertical rendue possible par le fait que le support d'aile ne rigidifie pas le bord supérieur de l'aile dans sa totalité.

L'aile 2 est alors fixe par rapport à la structure de carrosserie dans son coin supérieur 4, et montée glissante, selon une direction principalement longitudinale, sur la structure de carrosserie par l'intermédiaire des fixations glissantes des moyens d'indexage 56 portés par le premier moyen de support 40.

La position transversale est ajustée par la souplesse de l'aile 2. Dans le cas du montage d'une aile plastique avec un support d'aile selon l'invention, la souplesse de l'aile 2 permet de faciliter le montage du coin supérieur 4 alors que le premier moyen de support 40 a déjà réalisé l'indexage du bord supérieur 6 de l'aile 2. Un support d'aile selon la présente invention permet ainsi de faire jouer pour le montage la souplesse de l'aile, et n'induit pas d'effort dans le support d'aile lui-même, ce qui est le cas lorsqu'une unique pièce assure la mise en place géométrique du bord supérieur et du coin supérieur de l'aile.

La fixation des ailes 2 avant sur un support d'aile selon l'invention en deux parties permet ainsi un meilleur contrôle de la dispersion géométrique entre le montant de baie 14 d'une part, et l'aile 2 d'autre part. L'indexage fixe réalisé par l'équerre formant le premier moyen de renfort 30 évite en effet la déformation de la partie haute de l'aile. Le fait que l'indexage fixe soit réalisé dans le coin supérieur 4 permet de maîtriser la dilatation de l'aile 2, et notamment de la diriger vers l'avant du véhicule, longitudinalement selon la direction des moyens d'indexage glissants. Le jeu optimisé entre l'aile et le montant de baie est ainsi conservé après cataphorèse.

## Revendications

1. Agencement de fixation d'une aile (2) sur une structure de carrosserie (11, 12) d'un véhicule, du type comportant un support d'aile solidaire de la structure de carrosserie, et sur lequel est monté l'aile (2), **caractérisé en ce que** le support d'aile est formé d'un premier moyen de support (40) et d'un premier moyen de renfort (30) distinct dudit premier moyen de support (40), et **en ce que** d'une part l'aile (2) est montée sur le premier moyen de support (40) par l'intermédiaire d'au moins un moyen d'indexage glissant (56), et d'autre part l'aile (2) est montée sur le premier moyen de renfort (30) par l'intermédiaire d'ensemble de serrage (34, 35) sans degré de liberté.

2. Agencement selon la revendication 1, **caractérisé en ce que** le premier moyen de support (40) est associé au bord supérieur (6) de l'aile (2), et **en ce que** le premier moyen de renfort (30) est associé au coin supérieur (4) de l'aile (2) situé dans le prolongement arrière du bord supérieur (6).

3. Agencement selon la revendication 2, **caractérisé en ce que** le moyen d'indexage glissant (56) est apte à autoriser un degré de liberté selon la direction principale du bord supérieur (6) de l'aile (2).

4. Agencement selon l'une des revendications 1 à 3, **caractérisé en ce que** le premier moyen de support (40) est associé à un premier élément de structure de carrosserie (11), et **en ce que** le premier moyen de renfort (30) est associé à un deuxième élément de structure de carrosserie (12) distinct du premier élément de structure (11).

5. Agencement selon l'une des revendications précédentes, **caractérisé en ce que** le premier moyen de support (40) porte un moyen de serrage (58) de l'aile (2), en complément du au moins un moyen d'indexage glissant (56).

6. Agencement selon l'une des revendications précédentes, **caractérisé en ce que** le premier moyen de support (40) porte des amorces de rupture (62) de sorte que le premier moyen de support (40) est apte à s'affaisser sensiblement verticalement sous un effort déterminé.

7. Agencement selon l'une des revendications précédentes, **caractérisé en ce que** le premier moyen de support (40) porte des amorces de rupture (50) de sorte que le premier moyen de support (40) est apte à se compacter sensiblement longitudinalement sous un effort déterminé.

8. Agencement selon l'une des revendications précédentes, **caractérisé en ce que** l'aile (2) est une aile en matériau plastique.

9. Agencement selon l'une des revendications précédentes, **caractérisé en ce que** le support d'aile est en tôle.

10. Véhicule automobile du type comportant un agencement de fixation selon l'une des revendications précédentes.

## Claims

1. An arrangement for attaching a fender (2) to a bodywork structure (11, 12) of a vehicle, of the type comprising a fender support that is secured to the bodywork structure and on which the fender (2) is mounted, **characterized in that** the fender support is formed of a first supporting means (40) and of a first reinforcing means (30) distinct from said first supporting means (40), and **in that**, on the one hand, the fender (2) is mounted on the first supporting means (40) by means of at least one sliding indexing means (56), and on the other hand, the fender (2) is mounted on the first reinforcing means (30) by means of a clamping assembly (34, 35) with no degree of freedom.

2. The arrangement according to Claim 1, **characterized in that** the first supporting means (40) is associated with the top edge (6) of the fender (2) and **in that** the first reinforcing means (30) is associated with the top corner (4) of the fender (2) situated in the rear extension of the top edge (6).

3. The arrangement according to Claim 2, **characterized in that** the sliding indexing means (56) is capable of allowing a degree of freedom in the main direction of the top edge (6) of the fender (2).

4. The arrangement according to one of Claims 1 to 3, **characterized in that** the first supporting means (40) is associated with a first element of bodywork structure (11), and **in that** the first reinforcing means (30) is associated with a second element of bodywork structure (12) distinct from the first element of structure (11).

5. The arrangement according to one of the preceding claims, **characterized in that** the first supporting means (40) carries a means (58) for clamping the fender (2), in addition to the at least one sliding indexing means (56).

6. The arrangement according to one of the preceding claims, **characterized in that** the first supporting means (40) carries fracture initiation elements (62) so that the first supporting means (40) is capable of collapsing substantially vertically under a determined force.

7. The arrangement according to one of the preceding claims, **characterized in that** the first supporting means (40) carries fracture initiation elements (50) so that the first supporting means (40) is capable of being compressed substantially longitudinally under a determined force.

8. The arrangement according to one of the preceding claims, **characterized in that** the fender (2) is a fender made of plastic.

9. The arrangement according to one of the preceding claims, **characterized in that** the fender support is made of sheet metal.

10. A motor vehicle of the type comprising an attachment arrangement according to one of the preceding claims.

## Patentansprüche

1. Anordnung für die Befestigung eines Kotflügels (2) an einer Karosseriestruktur (11, 12) eines Fahrzeugs, des Typs, der einen mit der Karosseriestruktur fest verbundenen Kotflügelträger umfasst, an dem der Kotflügel (2) montiert ist, **dadurch gekennzeichnet, dass** der Kotflügelträger aus einem ersten Unterstützungsmittel (40) und aus einem ersten Verstärkungsmittel (30), das von dem ersten Unterstützungsmittel (40) verschieden ist, gebildet ist und dass einerseits der Kotflügel (2) an dem ersten Unterstützungsmittel (40) über wenigstens ein Gleitindexierungsmittel (56) montiert ist und andererseits der Kotflügel (2) an dem ersten Verstärkungsmittel (30) über eine Klemmanordnung (34, 35) ohne Freiheitsgrad montiert ist.

2. Anordnung nach Anspruch 1, **dadurch gekennzeichnet, dass** das erste Unterstützungsmittel (40) der oberen Kante (6) des Kotflügels (2) zugeordnet ist und dass das erste Verstärkungsmittel (30) der oberen Ecke (4) des Kotflügels (2), die sich in der Verlängerung nach hinten der oberen Kante (6) befindet, zugeordnet ist.

3. Anordnung nach Anspruch 2, **dadurch gekennzeichnet, dass** das Gleitindexierungsmittel (56) einen Freiheitsgrad in der Hauptrichtung der oberen Kante (6) des Kotflügels (2) zulassen kann.

4. Anordnung nach einem der Ansprüche 1 bis 3, **dadurch gekennzeichnet, dass** das erste Unterstützungsmittel (40) einem ersten Element der Karosseriestruktur (11) zugeordnet ist und dass das erste Verstärkungsmittel (30) einem zweiten Element der Karosseriestruktur(12), das von dem ersten Strukturelement (11) verschieden ist, zugeordnet ist.

5. Anordnung nach einem der vorhergehenden Ansprüche, **dadurch gekennzeichnet, dass** das erste Unterstützungsmittel (40) ein Klemmmittel (58) für den Kotflügel (2) zusätzlich zu dem wenigstens einen Gleitindexierungsmittel (56) trägt.

6. Anordnung nach einem der vorhergehenden Ansprüche, **dadurch gekennzeichnet, dass** das erste Unterstützungsmittel (40) Bruchauslöser (62) trägt, derart, dass das erste Unterstützungsmittel (40) bei einer bestimmten Kraft im Wesentlichen vertikal zusammensinken kann.

7. Anordnung nach einem der vorhergehenden Ansprüche, **dadurch gekennzeichnet, dass** das erste Unterstützungsmittel (40) Bruchauslöser (50) trägt, derart, dass sich das erste Unterstützungsmittel (40) bei einer bestimmten Kraft im Wesentlichen longitudinal zusammenziehen kann.

8. Anordnung nach einem der vorhergehenden Ansprüche, **dadurch gekennzeichnet, dass** der Kotflügel (2) ein Kotflügel aus Kunststoff ist.

9. Anordnung nach einem der vorhergehenden Ansprüche, **dadurch gekennzeichnet, dass** der Kotflügelträger aus Blech ist.

10. Kraftfahrzeug des Typs, der eine Befestigungsanordnung nach einem der vorhergehenden Ansprüche enthält.
